Europäisches Patentamt

European Patent Office

Office européen des brevets

(11) Veröffentlichungsnummer: **0 352 859**
**A2**

(12) **EUROPÄISCHE PATENTANMELDUNG**

(21) Anmeldenummer: 89201931.6

(22) Anmeldetag: 24.07.89

(51) Int. Cl.⁴: **G11B 15/10 , G11B 15/675**

(30) Priorität: 28.07.88 DE 3825589

(43) Veröffentlichungstag der Anmeldung:
**31.01.90 Patentblatt 90/05**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Kunze, Norbert**
**Mozartstrasse 7**
**D-6332 Ehringshausen(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Magnetbandkassettengerät mit einem zum Abspielen von Magnetbandkassetten dienenden Laufwerk.**

(57) Die Erfindung bezieht sich auf ein Magnetbandkassettengerät (1) mit einem zum Abspielen von Magnetbandkassetten dienenden Laufwerk, das über Bedienungsstangen (13a bis 15a) zu betätigen ist und einen Lademechanismus aufweist, der vermittels einer Betätigungsstange (13a), eines Lifthebels (3) und eines Betätigungshebels (21) die Magnetbandkassette (2) in eine Spielposition einziehen und in eine Ausnehmposition anheben und ausschieben kann, wobei ein Mitnehmer (31) der Betätigungsstange (13a), der eine Schwenkkulisse (25) des Betätigungshebels (21) abfährt, den Betätigungshebel (21) unter der Mitwirkung einer Ausschiebefeder (27a) in die Ausnehmposition ausschwenkt, wenn die Kulisse (25) diese Schwenkbewegung freigibt, und wobei der Lifthebel (3) mit einem Fahrstift (31) eine Liftkulisse (32) der Betätigungsstange (13a) abfährt, um den Lifthebel (3) nach Maßgabe der Liftkulisse (32) beim Verstellen der Betätigungsstange (13a) abzusenken oder anzuheben, wobei die Ausschiebefeder (27a) sowohl den Betätigungshebel (21) als auch die Betätigungsstange (13a) in Ausschieberichtung belastet und wobei eine Hebefeder (27) den Lifthebel (3) in Anheberichtung belastet.

Fig.1

## Magnetbandkassettengerät mit einem zum Abspielen von Magnetbandkassetten dienenden Laufwerk

Die Erfindung bezieht sich auf ein Magnetbandkassettengerät mit einem zum Abspielen von Magnetbandkassetten dienenden Laufwerk, das über Bedienungsstangen zu betätigen ist und einen Lademechanismus aufweist, der vermittels einer Betätigungsstange, eines Lifthebels und eines Betätigungshebels die Magnetbandkassette in eine Spielposition einziehen und absenken und in eine Ausnehmposition anheben und ausschieben kann, wobei ein Mitnehmer der Betätigungsstange, der eine Schwenkkulisse des Betätigungshebels abfährt, den Betätigungshebel unter der Mitwirkung einer Ausschiebefeder in die Ausnehmposition ausschwenkt, wenn die Kulisse diese Schwenkbewegung freigibt, und wobei der Lifthebel mit einem Fahrstift eine Liftkulisse der Betätigungsstange abfährt, um den Lifthebel nach Maßgabe der Liftkulisse beim Verstellen der Betätigungsstange abzusenken oder anzuheben.

Ein solches Magnetbandgerät ist aus der DE-PS 33 12 136 bekannt. Das Laufwerk läßt sich bedienen mit Hilfe von drei Bedienungsstangen, von denen eine Stange eine Auswurffunktion und zwei Stangen Schnellauffunktionen ausüben können. Die Bedienung der Bedienungsstangen erfolgt von Hand. Es ist ein Lademechanismus vorgesehen, der einen Kassettenschacht aufweist, der in eine Spielposition absenkbar und in eine Ausnehmposition anhebbar ist mittels eines Lifthebels, der mit einem Fahrstift von einer Liftkulisse an der Betätigungsstange betätigt wird. Weiterhin ist ein Betätigungshebel vorgesehen, der eine Schwenkkulisse aufweist, die von einem Mitnehmerstift der Betätigungsstange abgefahren wird. Wird eine Magnetbandkassette in den in Ausnehmstellung befindlichen Kassettenschacht eingeschoben, dann greift ein am Betätigungshebel gelagerter Kassettenhalter in eine Wickelausnehmung der Magnetbandkassette. Der Kassettenhalter nimmt die Magnetbandkassette dann in Einschubrichtung mit, wenn der Betätigungshebel im Uhrzeigersinn in eine Position verschwenkt, die er während des Spielbetriebes einnimmt. Während dieses Verschwenkens wird zugleich der Mitnehmerstift der Betätigungsstange von der Schwenkkulisse des Betätigungshebels freigegeben, und eine Auswurffeder schiebt die Betätigungsstange nach vorn. Dieses Nachvornbewegen führt dazu, daß der Fahrstift des Lifthebels in der Kulisse schräg nach unten läuft, womit der Lifthebel um seine Drehachse nach unten schwenkt und mit seinem vorderen Ende den Kassettenschacht in die Spielposition absenkt.

Die Ausfahrbewegung der Betätigungsstange wird mit Hilfe einer Übertotpunktfeder erreicht.

Beim Einschieben der Betätigungsstange zum Zwecke des Anhebens des Kassettenschachtes läuft der Fahrstift des Lifthebels relativ schwer in der Liftkulisse hoch. Die Schwergängigkeit wird umso größer, je steiler die Liftkulisse angelegt ist.

Es ist Aufgabe der Erfindung, den Lademechanismus des Magnetbandgerätes bei der Auswerfbewegung leichtgängiger zu machen bei Verkürzung des Einschubweges.

Die gestellte Aufgabe ist erfindungsgemäß dadurch gelöst, daß
- die Ausschiebefeder sowohl den Betätigungshebel als auch die Betätigungsstange in Ausschieberichtung belastet,
- eine Hebefeder den Lifthebel in Anheberichtung belastet.

Die Ausschiebefeder führt dabei eine Art ausgleichende Verspannwirkung aus. Wird die Bedienungsstange zum Auswerfen einer Kassette eingeschoben, dann schwenkt der Betätigungshebel nach vorn. Wird der Betätigungshebel beim Einstecken einer Kassette nach hinten geschwenkt, dann fährt die Betätigungsstange aus. Die Ausschiebefeder wird damit nicht wechselnd stark verspannt und wieder entspannt, sondern behält eine etwa gleichbleibende Spannung bei; sie kann deshalb hinsichtlich ihrer Konfiguration Federkraft optimal ausgelegt werden für leichte Betätigungskräfte der Betätigungsstange.

Die Anhebebewegung des Lifthebels wird durch die Hebefeder unterstütz. Der Fahrstift gleitet deshalb leichter in der Liftkulisse hoch. Dieses erleichterte Hochfahren ermöglicht eine steilere Führung der Liftkulisse und damit eine Verkürzung des Ausfahrweges der Betätigungsstange.

Nach einer weiteren Ausgestaltung der Erfindung ist vorgesehen, daß die Ausschiebefeder eine Drehfeder ist, die im Bereich des Drehlagers des Betätigungshebels angeordnet ist und mit einem Endschenkel den Betätigungshebel und mit dem anderen Endschenkel die Betätigungsstange in Ausschieberichtung belastet. Eine solche Drehfeder ist flach ausgebildet und beansprucht in der Höhe nur wenig Raum.

Nach einer weiteren Ausgestaltung der Erfindung ist vorgesehen, daß die Hebefeder eine Wendelfeder ist, die auf einem Drehzapfen des Lifthebels angeordnet ist, deren einer Endschenkel sich am Chassis und deren anderer Endschenkel in Anheberichtung gegen den Lifthebel drückt. Eine solche Wendelfeder mit einer Mehrzahl von Windungen ergibt innerhalb der jeweiligen Bewegungsbereiche nahezu gleichbleibende Andruckkräfte auf Betätigungshebel und Lifthebel.

Nach einer weiteren Ausgestaltung der Erfindung ist vorgesehen, daß die Bedienungsstangen mit Mitnehmerarmen in eine Ausnehmung der Betätigungsstange eingreifen, so daß jeder der Mitnehmerarme bei einer Ausfahrbewegung der jeweiligen Bedienungsstange die Betätigungsstange in Ausfahrrichtung mitnimmt, falls diese nicht ausgefahren ist.

Die Erfindung wird anhand der Zeichnung näher erläutert. Es zeigen:

Fig. 1 das Laufwerk eines Magnetbandkassettengerätes mit Kassettenschacht, Lifthebel, Betätigungshebel und Betätigungsstange,

Fig. 2 einen Ausschnitt aus dem Gerät, der das Zusammenwirken von Lifthebel, Betätigungshebel und Betätigungsstange in der Spielposition darstellt,

Fig. 3 den Ausschnitt nach Fig. 2 in der Ausnehmstellung,

Fig. 4 eine Seitenansicht des Ausschnittes nach Fig. 3.

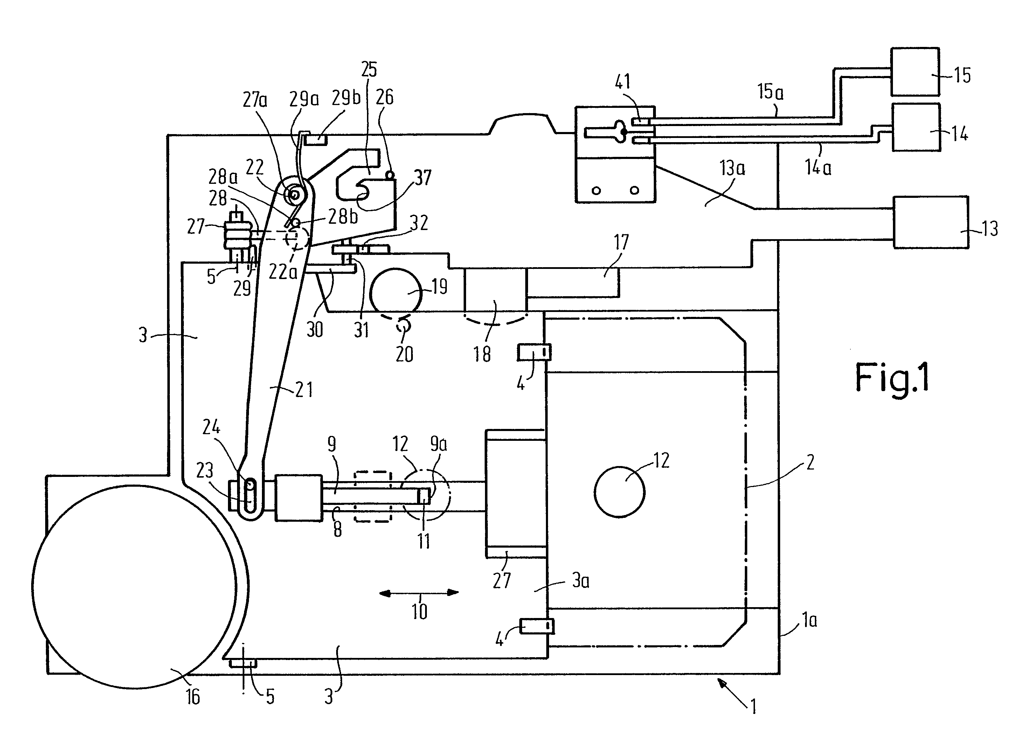

Das in Fig. 1 vereinfacht dargestellte Magnetbandkassettengerät 1 weist einen Kassettenschacht 1a auf, in den eine Kompaktkassette eingeschoben ist. Der Kassettenschacht 1a ist senkrecht zur Zeichenebene absenkbar mit Hilfe eines Lifthebels 3, der mit seinem vorderen Ende 3a unter Überwurflaschen 4 des Kassettenschachtes 1a greift. Der Lifthebel 3 ist um eine Achse 5 verschwenkbar. In dem Lifthebel 3 befindet sich eine Schlitzführung 8, in der ein streifenförmiger Kassettenhalter 9 in Richtung eines Doppelpfeiles 10 verschieblich ist. Der Kassettenhalter 9 ist an seinem vorderen Ende 9a mit einer Nase 11 versehen, die in ein Wickelloch 12 der Magnetbandkassette 2 eingefallen ist. Zum Durchführen der Laufwerksfunktionen sind eine Betätigungstaste 13 mit einer Betätigungsstange 13a und zwei Bedienungsstangen 14a, 15a mit Bedienungsknöpfen 14, 15 vorgesehen.

Es ist eine Kopfplatte 17 vorgesehen, auf der ein Magnetkopf 18 und eine Andruckrolle 19 angeordnet sind. Die Andruckrolle 19 arbeitet mit einer Tonwelle 20 zusammen.

Weiterhin ist ein Betätigungshebel 21 vorgesehen, der um eine Achse 22 verschwenkbar ist. Der Betätigungshebel 21 greift an seinem freien Ende mit einem Schlitz 23 über einen Zapfen 24 des Kassettenhalters 9. Die Nase 11 des Kassettenhalters 9 greift bei der Darstellung nach Fig. 1 in eine der Wickelbohrungen 12 der Kassette 2 ein. In dieser Stellung des Betätigungshebels 21 ist der Kassettenschacht 1a abgesenkt in seine Spielstellung.

Der Betätigungshebel 21 ist mit einer Schwenkkulisse 25 versehen, die von einem Mitnehmer 26 der Betätigungsstange 13a abgefahren wird. Auf die Achse 5 des Lifthebels 3 ist eine Hebefeder 27 aufgesteckt, die Endschenkel 28, 29 aufweist. Der eine Endschenkel 28 drückt gegen einen Dom 22a des Chassis 1, um den Lifthebel 3 im Uhrzeigersinn zu schwenken und damit den Kassettenschacht 1a in die Ausnehmstellung zu heben. Der andere Endschenkel 29 drückt dazu unter den Lifthebel 3.

Der Lifthebel 3 weist einen Ansatz 30 auf, an dem ein Fahrstift 31 angeordnet ist. Dieser Fahrstift 31 greift in eine geneigt zur Vertikalen ausgerichtete Liftkulisse 32. Über ihn ist der Lifthebel um die Achse 5 schwenkbar. Die Hebefeder 27 belastet den Lifthebel 3 ständig in der Anhebe- oder Hochschwenkrichtung.

Wie aus Fig. 1 zu ersehen ist, wirkt eine Ausschiebefeder 27a, die als Dreh- oder Wendelfeder ausgelegt ist, in Ausschieberichtung zwischen dem Betätigungshebel 21 und der Betätigungsstange 13a. Die Ausschiebefeder 27a ist als flache Wendel- oder Haarnadelfeder ausgebildet. Ein Endschenkel 28a stützt sich an einem Gegenlagerstift 28b des Betätigungshebels 21, und der andere Endschenkel 29a stützt sich an einem Gegenlagerblock 29 der Betätigungsstange 13a ab. Die Ausschiebefeder 27a ist ständig bestrebt, den Betätigungshebel 21 und die Betätigungsstange in Ausschieberichtung zu verschieben.

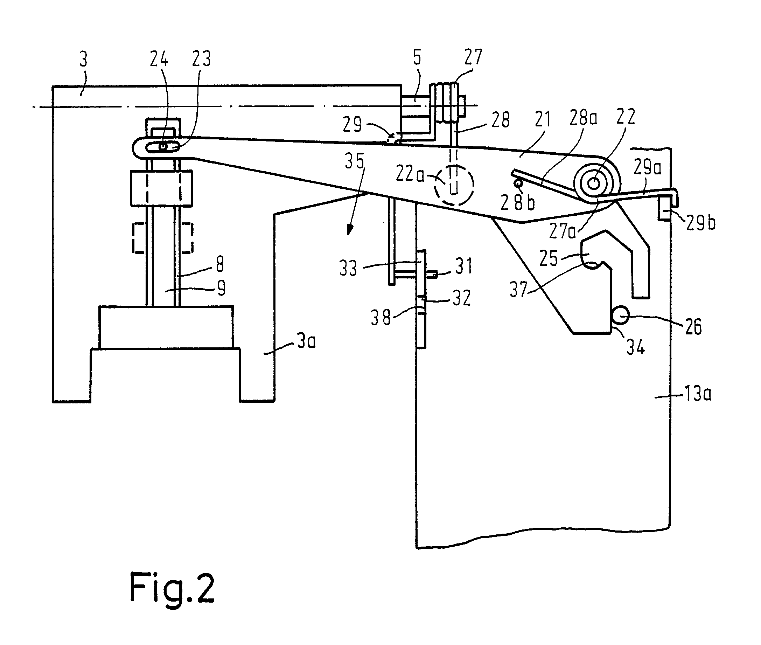

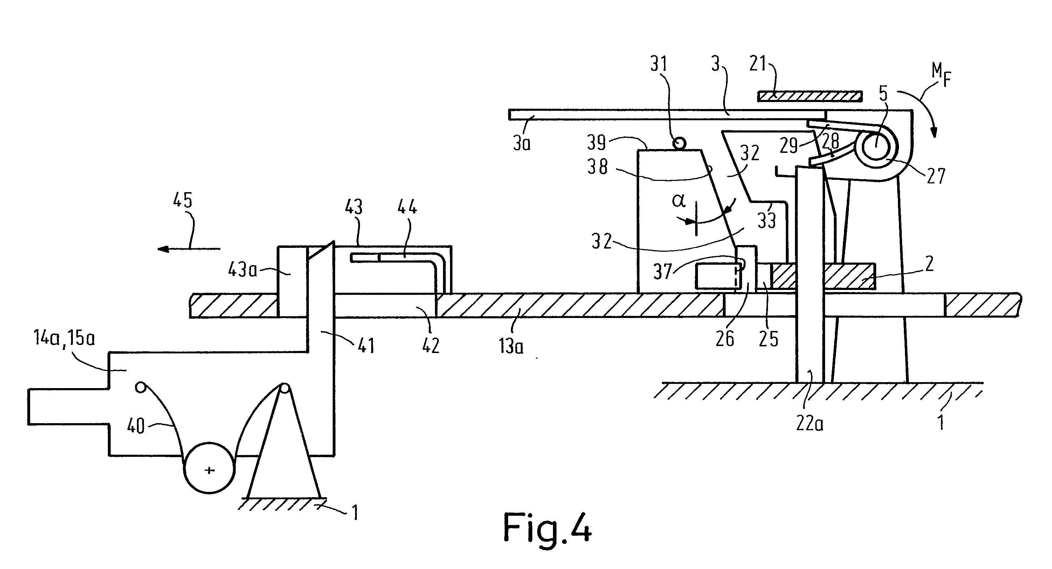

Fig. 2 zeigt einen Ausschnitt des Laufwerkes nach Fig. 1 mit einer vergrößerten Darstellung den Lademechanismus des Laufwerkes 1 mit Betätigungsstange 13a, Betätigungshebel 21 und Lifthebel 3 in ihrem gegenseitigen Zusammenwirken. Das vordere Ende 3a des Lifthebels 3 ist niedergeschwenkt, weil der Fahrstift 31 in der Kulisse 32 in die Zeichenebene nach unten hineingefahren und unter eine Kulissenwand 33 gerutscht ist (Fig. 4). Der Endschenkel 28 der Wendelfeder 27 drückt gegen den Dom 22a, und der andere Endschenkel 29 drückt unter den Lifthebel 3. Der Endschenkel 28a der Ausschiebefeder 27a drückt gegen den Gegenlagerstift 28b, und der andere Schenkel 29a der Ausschiebefeder 27a drückt gegen den Gegenlagerblock 29b. Der Mitnehmer 26 auf der Betätigungsstange 13a liegt auf einer Rampe 34 der Kulisse 25 des Betätigungshebels 21 auf. Die Kassette 2 ist eingeschoben und der Kassettenschacht 1a abgesenkt.

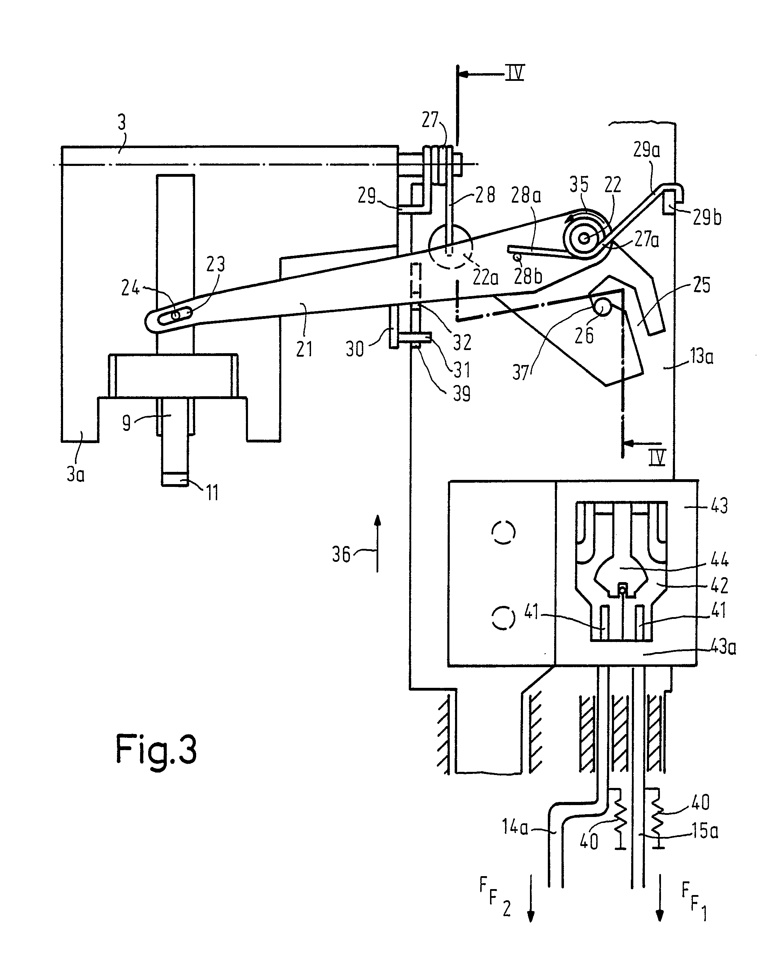

Fig. 3 zeigt eine Stellung des Lademechanismus, wobei der Betätigungshebel 21 in Richtung eines Pfeiles 35 verschwenkt ist. Der Schlitz 23 hat den Zapfen 23 dabei mitgenommen und den Kassettenhalter 9 in die Ausnehmposition vorgeschoben. Dieses wurde möglich, da die Betätigungsstange 13a in Richtung eines Pfeiles 36 eingeschoben wurde und der Mitnehmer 26 in die Vertiefung 37 der Schwenkkulisse 25 einfallen konnte. Durch dieses Einfallen des Mitnehmers 26 in die Mulde 37 wurde der Betätigungshebel 21 zum Verschwenken in Richtung des Pfeiles 35 freigegeben. Die Verschwenkung wurde verursacht von dem Endschenkel 28a der dem Ausschieben dienenden Haarnadelfeder 27. Zugleich mit dem Einschieben der Betätigungsstange 13a ist der Fahrstift 31 auf einer schrägen Rampe 38 der Liftkulisse 32 hochgeschoben worden zu einer oberen Auflage 39 der Liftkulisse 32. Der Aufbau der Liftkulisse 32 ergibt sich deutlicher aus Fig. 4.

Bei diesem Hochfahren ist das vordere Ende 3a des Lifthebels 3 hochgeschwenkt, und der Lifthebel 3 hat damit den aus Fig. 1 zu erkennenden Kassettenschacht 1a in die Ausnehmposition hochgehoben.

Fig. 3 zeigt die Bewegungsunterstützung des Hochhebens des Kassettenschachtes 1a und das Verschwenken des Betätigungshebels 21 durch die Tastenstangen 14a und 15a. Beide Tastenstangen sind mit Hilfe von auch aus Fig. 4 zu ersehenden Federn in Ausfahrrichtung belastet. An den Betätigungsstangen 14a und 15a sind Mitnehmerarme 41 vorgesehen. Diese Mitnehmerarme 41 greifen durch einen

Durchbruch 42 in der Betätigungsstange 13a und dort beispielsweise in einen Schaltkasten 43 ein, in dem sich ein verschwenkbarer Arm 44 befindet, der ein gleichzeitiges Einschieben beider Tastenstangen 14a und 15a verhindert. Die Mitnehmerarme 41 stoßen beim Ausfahren der Tastenstangen 14a, 15a gegen die Kastenwand 43a und belasten über den Kasten die Betätigungsstange in Ausschiebrichtung mit den Kräften $F_{F1}$ und $F_{F2}$ nach Fig. 3. Beide Federn 40 sorgen damit dafür, daß die Betätigungsstange 13a immer in Ausfahrrichtung federbelastet ist.

Fig. 4 zeigt anhand eines Teilschnittes IV nach Fig. 3 das Zusammenwirken der einzelnen Bauteile in dem Status nach Fig. 3. Man erkennt die Achse 5, um die der Lifthebel 3 verschwenkbar ist. Der Mitnehmer 26, der an der Betätigungsstange 13a befestigt ist, liegt in der Mulde 37 der Schwenkkulisse 25. Der Fahrstift 31 ist in der Liftkulisse 32 über die Rampe 38 auf die Ablage 39 aufgelaufen. Das vordere Ende 3a des Lifthebels 3 ist in der Horizontallage hochgeschwenkt und hat den in Fig. 4 nicht dargestellten Kassettenschacht 1a mit hochgehoben. Der Endschenkel 28 der Wendelfeder 27 hat das Anheben des Lifthebels 3 unterstützt, wobei der andere Endschenkel 29 durch sein Abstützen am Dom 22a die Kraft zum Anheben des Lifthebels 3 mit dem Fahrstift 31 unterstützt hat.

Aus Fig. 4 ist auch zu erkennen, wie die Mitnehmerarme 41 gegen die Kastenwand 43a drücken und die Bedienungsstangen 14a, 15a die Betätigungsstange 13a in Auswerfrichtung 45 belasten.

Der Steigungswinkel Alpha der Rampe 38 der Liftkulisse 32 kann infolge der Anhebeunterstützung durch die Feder 27 verkleinert werden, was eine Verkürzung des Ausschiebeweges zur Folge hat.

## Ansprüche

1. Magnetbandkassettengerät (1) mit einem zum Abspielen von Magnetbandkassetten dienenden Laufwerk, das über Bedienungsstangen (13a bis 15a) zu betätigen ist und einen Lademechanismus aufweist, der vermittels einer Betätigungsstange (13a), eines Lifthebels (3) und eines Betätigungshebels (21) die Magnetbandkassette (2) in eine Spielposition einziehen und in eine Ausnehmposition anheben und ausschieben kann, wobei ein Mitnehmer (31) der Betätigungsstange (13a), der eine Schwenkkulisse (25) des Betätigungshebels (21) abfährt, den Betätigungshebel (21) unter der Mitwirkung einer Ausschiebefeder (27a) in die Ausnehmposition ausschwenkt, wenn die Kulisse (25) diese Schwenkbewegung freigibt, und wobei der Lifthebel (3) mit einem Fahrstift (31) eine Liftkulisse (32) der Betätigungsstange (13a) abfährt, um den Lifthebel (3) nach Maßgabe der Liftkulisse (32) beim Verstellen der Betätigungsstange (13a) abzusenken oder anzuheben, dadurch gekennzeichnet, daß
- die Ausschiebefeder (27a) sowohl den Betätigungshebel (21) als auch die Betätigungsstange (13a) in Ausschieberichtung belastet,
- eine Hebefeder (27) den Lifthebel (3) in Anheberichtung belastet.

2. Magnetbandkassettengerät nach Anspruch 1, dadurch gekennzeichnet, daß die Ausschiebefeder eine Drehfeder (27a) ist, die im Bereich des Drehlagers (22) des Betätigungshebels (21) angeordnet ist und mit einem End schenkel (28a) den Betätigungshebel (21) in Ausschieberichtung und mit dem anderen Endschenkel (29a) die Betätigungsstange (13a) in Ausschieberichtung belastet.

3. Magnetbandkassettengerät nach Anspruch 1, dadurch gekennzeichnet, daß die Hebefeder (27) eine Wendelfeder ist, die auf einem Drehzapfen (5) des Lifthebels (3) angeordnet ist, deren einer Endschenkel (28) sich am Chassis (1) und deren anderer Endschenkel (29) in Anheberichtung gegen den Lifthebel (3) drückt.

4. Magnetbandkassettengerät nach Anspruch 1, bei dem parallel zur Betätigungsstange (13a) Bedienungsstangen (14a, 15a) angeordnet sind, die mittels Federn (40) in Ausfahrrichtung belastet sind, dadurch gekennzeichnet, daß die Bedienungsstangen (14a, 15a) mit Mitnehmerarmen (41) in eine Ausnehmung (42) der Betätigungsstange (13a) derart eingreifen, daß jeder der Mitnehmerarme (41) bei einer Ausfahrbewegung der jeweiligen Bedienungsstange (14a, 15a) die Betätigungsstange (13a) in Ausfahrrichtung mitnimmt, falls diese nicht ausgefahren ist.

Fig.1

1—IV—PHD 88-153

Fig.2

Fig.3

**Fig.4**

EP 0 352 859 A2

4-Ⅳ-PHD 88-153